# EUROPÄISCHE PATENTSCHRIFT

(11) **EP 3 388 716 B1**
(45) Veröffentlichungstag und Bekanntmachung des Hinweises auf die Patenterteilung: **08.09.2021**
(21) Anmeldenummer: 18167027.4
(22) Anmeldetag: 12.04.2018
(51) Int. Cl.: F16H 35/10, F16K 31/53

(54) **SCHLIESSVORRICHTUNG**
CLOSING DEVICE
DISPOSITIF DE FERMETURE

(30) Priorität: 12.04.2017 DE 102017107892
(43) Veröffentlichungstag der Anmeldung: 17.10.2018
(73) Patentinhaber: AUMA Riester GmbH & Co. KG, 79379 Müllheim (DE)
(72) Erfinder: Lange, Sebastian, 01640 Coswig (DE)
(74) Vertreter: Mertzlufft-Paufler, Cornelius

(56) Entgegenhaltungen:
- EP-A1- 2 518 376
- DE-A1- 19 500 078
- DE-A1-102010 034 843
- US-A- 4 651 973

## Beschreibung

Die Erfindung betrifft eine Schließvorrichtung mit einem Getriebe, das in einem Gehäuse angeordnet ist.

Solche Schließvorrichtungen sind bekannt und werden typischerweise eingesetzt, um Industriearmaturen oder verstellbare Absperrbauwerke zwischen einer Schließstellung und einer Offenstellung zu verstellen. Als (Schwenk-)Getriebe werden hierbei häufig ein- oder mehrstufige Schneckengetriebe, oftmals in Verbindung mit ein- oder mehrstufigen Getrieben als Vorgetriebe (beispielsweise Stirnrad-, Planeten- oder Kegelradgetriebe), verwendet, die typischerweise über eine Eingangswelle von einem Motor (z.b. elektrisch oder hydraulisch) oder mittels eines Handrads von einem Bediener angetrieben werden. Auch bei Absperrbauwerken, die sich öffnen und schließen, sind derartige Schließvorrichtungen einsetzbar und werden eingesetzt. Zu besonderen Anwendungsfällen, die nicht abschließend aufgezählt werden, gehören Hebeanlagen für Wehre und Absperrbauwerke, Anlagen im Bereich Stahlwasserbau wie zum Beispiel Schütz, Anlagen zum Hochwasserschutz, beispielsweise Wehre, Schleusen, etc., und Hebelgetriebe, die über ein Gestänge eine Anwendung betätigen, sowie weitere Anwendungsfälle, bei denen ein Getriebe selbsthemmend ist und/oder einen zumindest einseitig begrenzten Verstellweg abfährt.

Ferner ist es üblich, für die Verschwenkbewegung der Armatur oder des Absperrbauwerks Anschläge auszubilden, um ein Verstellen über die Offen- oder Schließposition hinaus zu vermeiden, da dies zu einer Beschädigung der Armatur oder des Absperrbauwerks führen kann.

Bei Verwendung solcher Anschläge besteht jedoch wiederum die Gefahr, dass aufgrund der wirkenden Anschlagskräfte eine Überlast an einem den Anschlag aufnehmenden Teil auftritt, was im schlimmsten Fall zu einem Gehäusebruch führen kann. Ein Gehäusebruch ist jedoch unbedingt zu vermeiden, da bei einem aufgebrochenen Gehäuse erstens lose Teile herabfallen, zweitens schädliche Stoffe austreten und drittens die Funktion der Armatur oder des Absperrbauwerks, insbesondere die Selbsthemmung seines Getriebes, verloren gehen könnte.

Bisher ist es üblich gewesen, die Gefahr eines Gehäusebruchs dadurch zu mindern, dass die die Verschwenkbarkeit begrenzenden Anschläge außerhalb des Gehäuses und in einem separaten Kraftkreis angeordnet wurden, sodass die Anschlagskräfte nicht in das Gehäuse des Getriebes eingeleitet werden. Eine solche Anordnung ist jedoch in vielen Anwendungen nicht optimal.

Aus der US 4,651,973 A ist ein Schieberventil bekannt mit einem gegossenen Körper, der von ausreichend geringem Gewicht ist, so dass das obere Ende des Schiebers teilweise in einem Hohlraum bleibt, der mit dem Körper verbunden ist, wenn sich der Schieber zwischen einer offenen und einer geschlossenen Position bewegt. Ein Stift ist am Stamm ausgebildet, welcher abschert, wenn eine erwartungsgemäße axiale Last an dem Stamm auftritt.

Zusammenfassend liegt der Erfindung somit die Aufgabe zugrunde, bei einer Schließvorrichtung, insbesondere im Bereich ihres Getriebes, die Gefahr eines Gehäusebruchs zu vermeiden, um eine hohe Betriebssicherheit zu gewährleisten.

Zur Lösung dieser Aufgabe sind erfindungsgemäß bei einer

Schließvorrichtung die Merkmale von Anspruch 1 vorgesehen. Somit wird erfindungsgemäß zur Lösung der Aufgabe bei einer Schließvorrichtung der eingangs genannten Art vorgeschlagen, dass in einem das Getriebe umfassenden Antriebsstrang der -Schließvorrichtung eine Sollbruchstelle ausgebildet ist. Die Schließvorrichtung ist als Armaturen-Schließvorrichtung oder als Absperrbauwerk-Schließvorrichtung ausgebildet. Hierbei sind Absperrbauwerke bekannt als ein Teil einer Stauanlage oder dergleichen von Menschen geschaffenes Bauwerk, das zumeist im Lauf von Fließgewässern, Kanälen, offenen oder nicht zu einer Umgebung abgeschlossenen Flüssigkeitstransportsystemen errichtet wird, um einen Stausee entstehen zu lassen oder Flüssigkeitstransportströme zu steuern. Die hier interessierenden Absperrbauwerke weisen ein Steuerteil auf, welches über die Schließvorrichtung betätigbar ist, um einen Durchfluss zu steuern. Eine Armatur kann beispielsweise als ein in Rohrleitungen und dergleichen, in der Regel zur Umgebung abgeschlossenem Leitungssystem zum Verändern oder Absperren von Stoffströmen dienendes Bauelement charakterisiert werden. Es versteht sich, dass eine solche erfindungsgemäße Schließvorrichtung selbstverständlich mit einer Armatur, beispielsweise einem Ventil, oder einem Absperrbauwerk abtriebsseitig koppelbar sein kann, um eine voll funktionsfähige Schließvorrichtung zu erhalten.

Durch die Ausbildung der Sollbruchstelle wird eine Kraft begrenzt, die durch die Sollbruchstelle hindurch und entlang des Antriebsstrangs in das Getriebe der Schließvorrichtung eingeleitet werden kann. Durch geeignete Dimensionierung der Sollbruchstelle kann diese maximal entlang des Antriebsstrangs übertragbare Kraft gerade so groß gewählt werden, dass sie kleiner ist als eine zweite Kraft, der das zugehörige Gehäuse, standhält. Somit ermöglicht es die Erfindung Begrenzungsanschläge, welche eine Schwenkbewegung der Armatur oder des (beweglichen Teils des) Absperrbauwerks begrenzen, innerhalb eines Gehäuses des Getriebes anzuordnen, um eine kompakte Bauweise desselben zu ermöglichen, wobei die Gefahr eines Gehäusebruchs gemindert oder sogar ganz beseitigt ist. Es ist somit erfindungsgemäß vorgesehen, dass die Schließvorrichtung mindestens einen Begrenzungsanschlag aufweist.

An dieser Stelle sei noch erwähnt, dass die Erfindung Ihre Vorteile auch bei einer Blockade des Getriebes entfaltet, welche nicht durch Erreichen eines Anschlags, sondern durch eine Blockade eines Stellelements, beispielsweise eines von dem Getriebe verstellbaren Ventils, verursacht wird. Denn auch in diesem Fall bewirkt die erfindungsgemäße Sollbruchstelle, dass der Kraftfluss und damit die Beanspruchung des Getriebes unterbrochen werden, sobald eine solche Blockade auftritt. Somit können zwar bei einer erfindungsgemäßen Schließvorrichtung Anschläge wie eingangs erläutert ausgebildet sein; für die technische Nutzung der Erfindung jedoch sind derartige Anschläge nicht zwingend erforderlich.

Eine erfindungsgemäße Schließvorrichtung mit den Merkmalen des Anspruchs 1 kann sicher betrieben werden, da das Auftreten von Überlasten an den Teilen des Gehäuses, welche die Begrenzungsanschläge ausbilden, effektiv vermieden wird. Hierbei wirkt die Sollbruchstelle als Sicherung, denn bei Überschreiten eines maximalen Antriebsmoments bricht sie und unterbindet somit wirksam die Einleitung von Kräften, die das Gehäuse des Getriebes beschädigen würden. Durch die erfindungsgemäße Ausgestaltung der Schließvorrichtung wird somit auf einfache Weise ein wirksamer Überlastschutz bereitgestellt.

Erfindungsgemäß kann die Aufgabe auch durch weitere vorteilhafte Ausführungen der Unteransprüche gelöst werden.

Beispielsweise sieht eine bevorzugte Ausgestaltung der Erfindung vor, dass das Getriebe der Schließvorrichtung selbsthemmend ausgebildet ist. Die Verwendung eines selbsthemmenden Getriebes kann vorteilhaft sein, da in diesem Fall auch bei einer Unterbrechung des Antriebsstrangs im Falle eines Bruchs der Sollbruchstelle bei Überlast sichergestellt werden kann, dass sich die Armatur oder das Absperrbauwerk nicht selbsttätig verstellt. Bei Verwendung eines nicht-selbsthemmenden Getriebes müsste dagegen in vielen Anwendungsfällen die Schließvorrichtung mit einer zusätzlichen Vorrichtung versehen werden, um im Falle einer Unterbrechung des Antriebsstrangs die Armatur oder das Absperrbauwek in ihrer oder seiner Position fixieren zu können.

Hierbei ist es gemäß der Erfindung besonders vorteilhaft, wenn die Sollbruchstelle antriebsseitig zu dem selbsthemmenden Getriebe im Antriebsstrang angeordnet ist. Denn in diesem Fall kann das Getriebe aufgrund seiner Selbsthemmung auch im Falle eines Bruchs der Sollbruchstelle ein selbsttätiges Verstellen der Armatur oder des Absperrbauwerks wirksam unterbinden.

Mit Bezug auf den Begriff "antriebsseitig" sei erläutert, dass ein selbsthemmendes Getriebe nicht von der Seite der Armatur oder dem Absperrbauwerk her angetrieben werden kann. Somit kann antriebsseitig als eine Position entlang des Antriebsstrangs verstanden werden, die, in Bezug auf eine hemmende Stelle innerhalb des Getriebes, auf der Seite des, typischerweise elektrischen und/oder manuellen, Antriebs der Schließvorrichtung liegt. Somit ist bei Verwendung eines selbsthemmenden Getriebes die Sollbruchstelle bevorzugt zwischen dem Antrieb und einer hemmenden Stelle des Getriebes im Antriebsstrang angeordnet.

Wird im Folgenden von Momenten gesprochen, so versteht sich, dass mit den Momenten stets Kräfte verknüpft sind, die auf die Sollbruchstelle wirken, beziehungsweise welche in den Antriebsstrang und damit in das Getriebe des Stellantriebs eingeleitet werden.

Gemäß einer Ausgestaltung der Erfindung kann die Sollbruchstelle in Form einer Torsionsbruchstelle ausgebildet sein. Hierbei kann ein Bruchmoment der Torsionsbruchstelle so gewählt sein, dass es kleiner ist als ein Antriebsmoment, dem das Getriebe, insbesondere das zugehörige Gehäuse, standhält. Beispielsweise kann das Bruchmoment ein Vielfaches eines Betätigungsmoments betragen. Als Bruchmoment kann hier beispielsweise ein am Eingang des Getriebes wirkendes Moment oder ein direkt auf die Sollbruchstelle wirkendes Moment angesehen werden, bei der eine Schwächung oder ein Brechen der Sollbruchstelle auftritt.

Von Vorteil ist bei dieser Ausgestaltung, dass einerseits die zuvor beschriebene Sicherheit gegen Überlasten erzielt werden kann und dass andererseits eine hohe Genauigkeit bei der Definition eines maximalen von der Torsionsbruchstelle übertragbaren Antriebsmoments erzielbar ist. Beispielsweise können Torsionsbruchstellen in homogenen Materialien durch Wahl von Durchmessern und Gestaltung von Rundungen sehr genau definiert werden, wie noch genauer zu erläutern sein wird.

Gemäß einer weiteren Ausgestaltung der Erfindung kann die Sollbruchstelle insbesondere so dimensioniert werden, dass ihr Bruchmoment ein Vielfaches, vorzugsweise mindestens ein Anderthalbfaches, besonders bevorzugt mindestens ein Zweifaches, eines Betätigungsmomentes beträgt. Als Betätigungsmoment kann hier beispielsweise ein bei normalem Betrieb typischerweise an der Sollbruchstelle auftretendes maximales Moment angesehen werden. Durch diese Ausgestaltung wird erreicht, dass die Sollbruchstelle zwar sicher bei Überlast nicht jedoch bereits im Normalbetrieb bricht.

Gemäß der Erfindung ist innerhalb des Gehäuses des Getriebes, wenigstens ein Begrenzungsanschlag ausgebildet, der eine Bewegung im Antriebsstrang, der Armatur oder des Absperrbauwerks, begrenzt. Um eine Beschädigung des Gehäuses durch eine Krafteinleitung an der Stelle des Begrenzungsanschlags zu verhindern, sieht eine Ausgestaltung der Erfindung daher vor, dass die Sollbruchstelle derart ausgelegt ist, dass eine maximale Kraft, welche über die Sollbruchstelle hinweg entlang des Antriebsstrangs und bis zu dem wenigstens einen Begrenzungsanschlag übertragbar ist, kleiner ist als eine zweite Kraft, der das Gehäuse standhält, wenn diese zweite Kraft an der Stelle des wenigstens einen Begrenzungsanschlags wirkt.

Eine besonders bevorzugte Ausgestaltung der Erfindung sieht vor, dass die Sollbruchstelle an einem Teil des Antriebsstrangs ausgebildet ist, welches lösbar mit dem Getriebe oder einem Vorgetriebe gekoppelt ist. Durch diese Ausgestaltung kann das Teil, welches die Sollbruchstelle trägt, nach einem Bruch derselben sehr einfach aus dem betroffenen Getriebe entnommen werden, was den Aufwand zur Instandsetzung der Schließvorrichtung senkt.

Gemäß einer weiteren Ausgestaltung der Erfindung kann vorgesehen sein, dass die Sollbruchstelle in und/oder an einer Welle des Getriebes oder eines Vorgetriebes ausgebildet ist. Diese Ausgestaltung ist bevorzugt, da sich Wellen im Falle eines Bruchs typischerweise weniger oder gar nicht Verkanten als andere Teile eines Getriebes. Somit können im Falle eines Bruchs der Sollbruchstelle Folgebeschädigungen des Getriebes durch blockierende Teile vermieden werden.

Gemäß einer weiteren Ausgestaltung der Erfindung lässt sich eine erfindungsgemäße Sollbruchstelle besonders einfach realisieren, wenn sie in Form einer Querschnittsverjüngung ausgebildet ist. Damit ist eine Möglichkeit benannt, unter Verwendung von an sich bekannten Bauteilen eine wohl definierte Sollbruchstelle zu erhalten. Denn durch Verjüngung eines Querschnitts eines Bauteils kann die Sollbruchstelle sowohl an einer Welle oder an sonstigen beweglichen oder statischen Teilen des Getriebes realisiert sein.

Generell ist es gemäß der Erfindung vorteilhaft, wenn die Querschnittsverjüngung an einem Übergang zu einem größeren Durchmesser oder Querschnitt einen Übergangsradius aufweist. Ein solcher Übergangsradius kann wenigstens 0.3 mm, bevorzugt wenigstens 0.5 mm, besonders bevorzugt wenigstens 1.0 mm, betragen. Durch einen Übergangsradius werden scharfe Kanten vermieden, an denen mechanische Spannungen und dadurch hervorgerufene Mikrorisse auftreten können, die zu einer ungewollten Varianz des Bruchmoments der Sollbruchstelle führen können. Mit anderen Worten kann durch das Vorsehen der beschriebenen Übergangsradien eine Sollbruchstelle von hoher Dauerfestigkeit erhalten werden. Wenn in einer konkreten Anwendung die Dauerfestigkeit keine oder eine nur geringe Rolle spielt, so kann der Übergangsradius sehr klein gewählt sein oder sogar nicht ausgebildet sein; bei Anwendungen mit hoher Betriebszyklenzahl und dementsprechend hohen Anforderungen an die Dauerfestigkeit der Sollbruchstelle ist es dagegen günstig, wenn der Übergangsradius groß, also insbesondere mit den oben beschriebenen Werten, ausgebildet ist.

Gemäß einer spezifischen Ausgestaltung der Erfindung kann die Querschnittsverjüngung in Form eines Einstichs ausgestaltet sein. Hierbei ist es bevorzugt, wenn der Einstich den Querschnitt über einen Winkelbereich von 360° schwächt. Wird der Einstich beispielsweise an einer Welle angebracht, beispielsweise als ringförmige Einfräsung, so ist es erfindungsgemäß vorteilhaft, wenn eine Tiefe des Einstichs wenigstens 10% des Durchmessers dieser Welle beträgt. Durch derartige Ausgestaltungen kann sichergestellt werden, dass die Welle exakt an der Stelle des Einstichs und nicht in vor- oder nachgelagerten Bereichen bricht. Somit kann der Bruch besser kontrolliert und Folgeschäden am Antriebsstrang, insbesondere dem Getriebe, vermieden werden.

Eine weitere bevorzugte Ausgestaltung gemäß der Erfindung sieht vor, dass, bei Ausgestaltung der Querschnittsverjüngung als Einstich, an einem Übergang zwischen einem Einstichsgrund und einer Einstichsseitenwand ein Übergangsradius ausgebildet ist. Damit werden, wie bereits zuvor beschrieben, mechanische Spannungsspitzen vermieden, die die Dauerfestigkeit der Sollbruchstelle negativ beeinflussen können.

Eine Querschnittsverjüngung als Einstich kann erfindungsgemäß zum Beispiel als Vollausrundung oder als eine rechteckige Nut ausgebildet sein. Erfindungsgemäß sind runde Formen bevorzugt, da sie Spannungsspitzen vermeiden helfen. Dies ist vorteilhaft, um ein definiertes Bruchmoment zu erhalten. Aber auch Rillen oder Schultern können erfindungsgemäß genutzt werden, um eine Sollbruchstelle durch Verjüngung eines Querschnitts einer Welle oder eines sonstigen beweglichen oder statischen Teils des Getriebes zu definieren.

Als Alternative zu den beschriebenen Nuten sieht eine weitere Ausgestaltung der Erfindung vor, dass die Querschnittsverjüngung durch mindestens eine Bohrung ausgebildet ist. Es versteht sich, dass eine Bohrung einen Querschnitt, zum Beispiel eines Getriebeteils, typischerweise nur in einem begrenzten Winkelbereich schwächt, was jedoch ausreichend sein kann, um eine Sollbruchstelle zu definieren. Die Bohrung kann erfindungsgemäß beispielsweise entlang eines Durchmessers verlaufen oder aber auf andere Weise, solange die Bohrung durch Materialwegnahme eine Querschnittsschwächung eines Getriebeteils und damit eine Sollbruchstelle bewirkt.

Um eine gewünschte Materialschwächung zur Bildung einer Sollbruchstelle zu erzeugen kann alternativ oder ergänzend eine erfindungsgemäße Querschnittsverjüngung beispielsweise auch an einer Hohlwelle durch einen Einstich von innen, also innenseitig an einer Hohlwelle, ausgebildet sein. Es sind folglich auch Sackbohrlöcher, Ausstanzungen oder dergleichen als erfindungsgemäße Querschnittsverjüngung ausgestaltbar.

Eine wiederum weitere Ausgestaltung der Erfindung sieht vor, dass die Sollbruchstelle an einer Eingangswelle des Getriebes oder eines Vorgetriebes ausgebildet ist. Mit anderen Worten schlägt diese Ausgestaltung vor, mit Ausnahme der Eingangswelle alle weiteren Teile des Getriebes der Sollbruchstelle, von der Antriebsrichtung her gesehen, also insbesondere vom Motor des Stellantriebs gesehen, nachgelagert anzuordnen. Damit kann eine Beschädigung dieser weiteren Teile wirksam vermieden werden. Im Falle eines Bruchs der Sollbruchstelle, zum Beispiel als Folge einer Überbeanspruchung durch den Motor des Stellantriebs, muss lediglich die Eingangswelle ausgetauscht werden; alle weiteren Teile des Getriebes bleiben dagegen unversehrt und können weiter verwendet werden. Durch diese Ausgestaltung wird also der mögliche Schaden am Getriebe aufgrund einer Überbeanspruchung von vorne herein minimiert.

Für eine möglichst genaue Festlegung des Ansprechens der Sollbruchstelle auf Überlasten ist es gemäß einer weiteren Ausgestaltung der Erfindung vorteilhaft, wenn ein Getriebeteil, an welchem die Sollbruchstelle ausgebildet ist, mindestens von einer Lagerung, bevorzugt von mindestens zwei Lagerungen, gehalten ist. Eine solche Lagerung ist zwar nicht zwingend erforderlich; sie kann aber nützlich sein, insbesondere um eine radiale und/oder axiale Fixierung eines die Sollbruchstelle aufweisenden Getriebeteils zu erreichen. Somit kann sichergestellt werden, dass das Getriebeteil nach dem Brechen der Sollbruchstelle an seinem Platz im Getriebe verbleibt.

Eine erfindungsgemäße Lagerung kann beispielsweise bereits durch Getriebeteile wie Planetenräder erreicht werden, die mit dem die Sollbruchstelle aufweisenden Getriebeteil in Eingriff stehen. Ein erfindungsgemäße Lagerung kann auch durch ein separates Lager / durch separate Lager ausgebildet sein. Generell vorteilhaft an der Ausbildung von Lagerungen ist einerseits, dass Querkräfte und Biegemomente aufgenommen werden können und andererseits, dass auch nach einem Bruch der Sollbruchstelle das die Sollbruchstelle tragende Teil in seiner Position gehalten werden kann, wodurch insbesondere ein Verkanten vermieden werden kann. Eine Lagerung kann somit beispielsweise dann vorteilhaft sein, wenn der Antrieb durch ein Handrad gebildet ist, welches Querkräfte und Biegemomente auf eine die Sollbruchstelle aufweisende Eingangswelle überträgt.

Wird eine erfindungsgemäße Lagerung ausgebildet, so ist es bevorzugt, wenn die Lagerung oder die Lagerungen antriebsseitig in Bezug auf die Sollbruchstelle angeordnet ist/sind. Ist die Sollbruchstelle beispielsweise an einer Welle des Getriebes ausgebildet, so können durch diese Ausgestaltungen auf die Welle wirkende Biegemomente von den Lagerungen, insbesondere von Lagern, aufgefangen werden. Im Ergebnis führen somit lediglich Torsionsmomente, die beispielsweise durch einen Motor oder ein Handrad auf die Welle ausgeübt werden, zu einem Bruch der Sollbruchstelle. Damit ist eine höhere Genauigkeit bei der Definition des Bruchmoments der Sollbruchstelle erreichbar, da der Einfluss von parasitären Momenten auf die Sollbruchstelle begrenzt wird.

In gewissen Anwendungen kann es vorteilhaft sein, an dem Getriebe antriebsseitig ein weiteres Vorgetriebe, beispielsweise ein mehrstufiges Planetengetriebe, vorzuschalten, zum Beispiel um hohe Stellkräfte zu erzeugen. Gemäß der Erfindung ist es in einem solchen Fall günstig, wenn nicht die Eingangswelle des Getriebes, sondern ein zwischen Getriebestufen angeordnetes Getriebeteil, beispielsweise ein zwischen dem Getriebe und dem Vorgetriebe geschaltetes Zwischenritzel oder eine zwischen Getriebestufen angeordnete Zwischenwelle mit einer Materialschwächung versehen ist, die als Sollbruchstelle dient. Dies hat den Vorteil, dass im Betrieb möglichst keine Querkräfte an der Sollbruchstelle auftreten, sodass die Sollbruchstelle nur bei einer gewünschten Torsionsbeanspruchung bricht. Somit kann der Überlastschutz genau definiert und eingehalten werden.

Mit anderen Worten sieht eine weitere Ausgestaltung der Erfindung somit vor, dass die Sollbruchstelle an einem zwischen Getriebestufen angeordneten Getriebeteil, insbesondere an einem Zwischenritzel oder einer Zwischenwelle, ausgebildet ist, welches zwischen einer ersten Getriebestufe und einer zweiten Getriebestufe Schließvorrichtung vermittelt. Von Vorteil ist bei dieser Lösung, dass im Falle eines Bruchs der Sollbruchstelle lediglich ein Zwischenritzel oder eine Zwischenwelle, welches/welche typischerweise an einer Schnittstelle der beiden Getriebestufen platziert ist, ausgetauscht werden muss; die beiden Getriebestufen, beispielsweise Getriebe und Vorgetriebe und insbesondere deren Gehäuse sind dagegen vor Beschädigungen durch eine Überbeanspruchung geschützt.

Gerade um das Auswechseln des Getriebeteils, welches die Sollbruchstelle trägt, zu erleichtern, ist es gemäß einer weiteren Ausgestaltung der Erfindung vorteilhaft, wenn die Sollbruchstelle an einem beweglichen Teil des Getriebes ausgebildet ist, welches so in Eingriff mit weiteren Teilen des Getriebes steht, dass es entgegen einer Einbaurichtung aus dem Getriebe entnommen werden kann. Hierbei ist es naturgemäß von Vorteil, wenn eine solche Entnahme insbesondere nach einem Bruch der Sollbruchstelle möglich ist. Damit wird eine leichte Auswechselbarkeit des die Sollbruchstelle tragenden Getriebeteils ohne Beeinträchtigung der Funktion des Getriebes insgesamt ermöglicht.

Die Erfindung wird nun anhand von Ausführungsbeispielen näher beschrieben, ist aber nicht auf diese Ausführungsbeispiele beschränkt.

Weitere Ausführungsbeispiele ergeben sich durch Kombination der Merkmale einzelner oder mehrerer Schutzansprüche untereinander und/oder mit einzelnen oder mehreren Merkmalen des jeweiligen Ausführungsbeispiels. Insbesondere können somit Ausbildungen der Erfindung aus der nachfolgenden Beschreibung eines bevorzugten Ausführungsbeispiels in Verbindung mit der allgemeinen Beschreibung, den Ansprüchen sowie den Zeichnungen gewonnen werden.

Es zeigt:
- Fig. 1: eine Aufsicht mit teilweiser Schnittansicht einer erfindungsgemäßen Schließvorrichtung, mit einem Schnecken-Schwenk-Getriebe und einem zweistufigen Planetengetriebe als Vorgetriebe, wobei eine erfindungsgemäße Sollbruchstelle an einem als Zwischenritzel fungierenden Sonnenrad des Vorgetriebes ausgebildet ist,
- Fig. 2: eine Detailansicht einer weiteren erfindungsgemäßen Schließvorrichtung, mit einem einstufigen Planetengetriebe als Vorgetriebe, wobei eine Sollbruchstelle an einer Eingangswelle ausgebildet ist.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

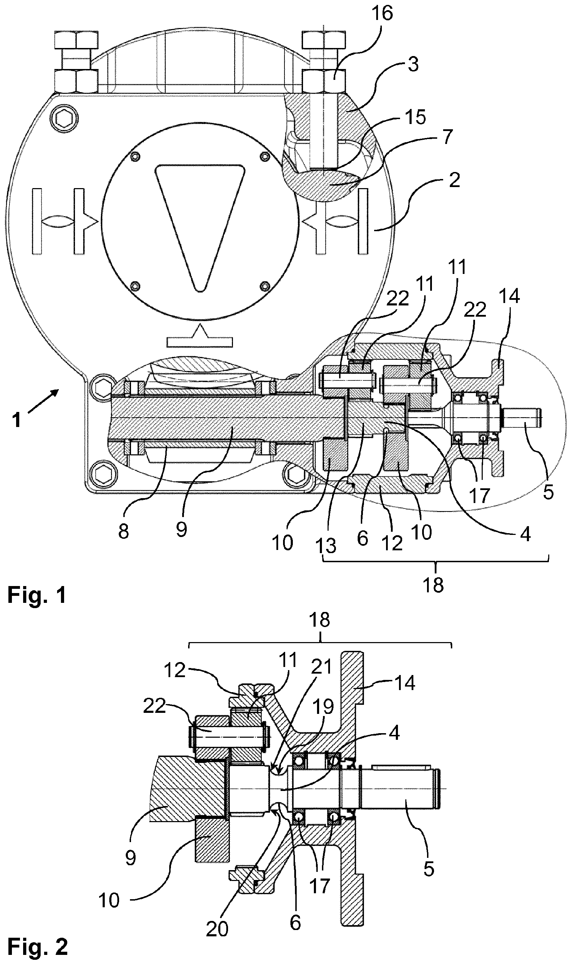

Die Figur 1 zeigt eine im Ganzen mit 1 bezeichnete erfindungsgemäße Schließvorrichtung am Beispiel einer Armaturen-Schließvorrichtung. Diese weist ein selbsthemmendes Getriebe 2 auf, das in einem Gehäuse 3 angeordnet ist. Das Getriebe 2 ist in Form eines Schwenkgetriebes mit SchwenkAnschlägen 15 ausgestaltet und durch ein Schneckengetriebe gebildet, das ein Schneckenrad 7 aufweist, welches eine Armatur oder ein bewegliches Teil eines Absperrbauwerks der Schließvorrichtung 1 verschwenkt. Das Schneckenrad 7 wird dabei von einer Schneckenwelle 8, 9 angetrieben. Die Schneckenwelle 8, 9 ist durch eine Hohlschnecke 8 gebildet, die drehfest auf einer Trägerwelle 9 montiert ist. Bei weiteren erfindungsgemäßen Ausgestaltungen kann die Schneckenwelle auch einteilig ausgeführt sein.

Die Trägerwelle 9, die die Eingangswelle des Getriebes 2 bildet, wird durch einen Planetenradträger 10 angetrieben, der Teil eines zweistufigen Planetengetriebes 18 ist, welches als Vorgetriebe 18 dient. Das Vorgetriebe 18 weist Planetenräder 11, welche jeweils über Planetenradbolzen 22 mit einem Planetenradträger 10 verbunden sind, ein feststehendes Hohlrad 12, einen Gehäusedeckel 14, eine antriebsseitige Eingangswelle 5, welche als Sonnenrad der antriebsseitigen Planetenstufe fungiert, sowie ein weiteres Sonnenrad auf, dass als Zwischenritzel 13 zwischen der ersten und der zweiten Stufe des Planetengetriebes vermittelt. Da das Zwischenritzel 13 mit dem Planetenradträger 10 der ersten Getriebestufe torsionsfest verbunden ist und mit den Planetenrädern 11 der zweiten Getriebestufe kämmt, vermittelt es zwischen einer ersten und einer zweiten Getriebestufe des Vorgetriebes 18 beziehungsweise der Schließvorrichtung 1 insgesamt.

Der Antriebstrang der in Figur 1 gezeigten Schließvorrichtung 1 umfasst somit das Schneckengetriebe 2 und das zweistufige Planetengetriebe 18. Über die Eingangswelle 5 kann, beispielsweise mit Hilfe eines elektrischen Antriebs oder über eine manuelle Antriebsvorrichtung, ein Antriebsmoment in das Vorgetriebe 18 eingebracht werden, welches auf das eigentliche Schwenkgetriebe 2 der Schließvorrichtung 1 übertragen wird, wobei eine Drehmomentwandlung stattfindet.

Wird die Schneckenwelle 8,9 angetrieben, so rotiert das Schneckenrad 7 entsprechend, wobei mittels Kontermuttern 16 und entsprechender Einstellschrauben Anschläge 15 innerhalb des Gehäuses 3 des Getriebes 2 ausgebildet sind. Diese Anschläge 15 begrenzen die Rotation des Schneckenrads 7 und damit eine Schwenkbewegung der angesteuerten Armatur oder des angesteuerten Absperrbauwerks. Schlägt das Schneckenrad 7 am Anschlag 15 an und wird jedoch weiter vom Antrieb vermittelt durch den Antriebsstrang angetrieben, so werden Kräfte über den Anschlag 15 in das Gehäuse 3 eingeleitet. Die Begrenzung dieser Kräfte auf ein Maß, welches für das Gehäuse 3 sicherheitstechnisch unkritisch ist, ist die Aufgabe der vorliegenden Erfindung.

Diese Aufgabe wird, wie Figur 1 anschaulich zeigt, gelöst, indem in dem Antriebstrang, nämlich an dem Zwischenritzel 13, eine Sollbruchstelle 4 ausgebildet ist. Bei dem in Figur 1 gezeigten Ausführungsbeispiel ist die Sollbruchstelle 4 als eine Torsionsbruchstelle 4 ausgestaltet: Wird ein gewisses Antriebsmoment, das auf die Eingangswelle 5 wirkt, überschritten, so bricht das Zwischenritzel 13 in der Ebene, die durch die an dem Zwischenritzel 13 ausgebildete Querschnittsverjüngung 6 definiert ist. Das Bruchmoment, ab dem die Torsionsbruchstelle 4 bricht, kann dabei so gewählt sein, dass es um ein Vielfaches größer ist als ein typischerweise im Betrieb für das Verstellen der angeschlossenen Armatur bzw. des angeschlossenen Absperrbauwerks an der Stelle der Sollbruchstelle 4 benötigtes Antriebsmoment.

Die in Figur 1 illustrierte erfindungsgemäße Querschnittsverjüngung 6 ist in Form eines nutförmigen Einstichs ausgestaltet, der entlang des gesamten Umfangs des zylindrischen Zwischenritzels 13 (als Schnitt dargestellt in Fig.1) verläuft. Das Zwischenritzel 13 selbst, das als Sonnenrad für die zweite Getriebestufe des Planetengetriebes dient, ist lösbar mit den Planetenrädern 11 des Vorgetriebes 18 mittels einer Verzahnung gekoppelt. Es kann somit insbesondere sehr einfach entgegen seiner Einbaurichtung aus dem Vorgetriebe 18 entnommen werden.

Die Figur 2 illustriert eine weitere erfindungsgemäße Ausgestaltung einer Sollbruchstelle 4 in einem Antriebsstrang, genauer an einem Vorgetriebe 18, einer erfindungsgemäßen Schließvorrichtung 1, wieder am Beispiel einer Armaturen-Schließvorrichtung. Dargestellt in Figur 2 ist eine Querschnittsansicht dieses Vorgetriebes 18, genauer ein Ausschnitt eines Querschnitts eines einstufigen Planetengetriebes, das analog zu dem Vorgetriebe 18 der Figur 1 eingesetzt werden kann.

Das Vorgetriebe 18 der Figur 2 hat eine Eingangswelle 5 (nicht geschnitten dargestellt) an der eine umlaufende Querschnittsverjüngung 6 ausgebildet ist, deren Ebene eine Torsionssollbruchstelle 4 definiert. Die Eingangswelle 5 ist somit das Getriebeteil, an welchem die Sollbruchstelle 4 ausgebildet ist. Die Sollbruchstelle 4 ist bei dem in Figur 2 gezeigten Ausführungsbeispiel zudem antriebsseitig zu dem Getriebe 2 im Antriebsstrang ausgebildet. Der Antrieb wirkt somit direkt auf das Getriebeteil, an dem die Sollbruchstelle ausgebildet ist. Eine solche Ausgestaltung ist gemäß der Erfindung prinzipiell vorteilhaft, da damit Beschädigungen an nachfolgenden Teilen der Getriebe 2 und 18 wirksam vermieden werden können.

Die Eingangswelle 5 des Vorgetriebes 18 in Figur 2 ist von zwei Lagerungen 17 gehalten, die in Form von Lagern ausgebildet sind, wobei die Lagerungen in Bezug auf die Sollbruchstelle 4 antriebsseitig angeordnet sind. Diese Lagerungen 17 können insbesondere Querkräfte aufnehmen, falls solche auf die Eingangswelle 5 einwirken (z.B. bei Betätigung der Eingangswelle 5 mittels eines Handrades). Damit wird eine unerwünschte (Quer-)Belastung der Sollbruchstelle 4 vermieden.

In Figur 2 ist gut zu erkennen, dass die Querschnittsverjüngung 6 als eine Vollausrundung ausgebildet ist. Die Vollausrundung, die auch als ein Einstich angesehen werden kann, weist eine Tiefe, gemessen vom Außendurchmesser der Eingangswelle 5 bis zum Boden der Ausrundung, dem Einstichsgrund 19, von ca. 20% des Durchmessers der Eingangswelle 5 auf. Eine zusätzliche Schwächung des Querschnitts an der Stelle der Sollbruchstelle 4 könnte gemäß der Erfindung beispielsweise durch radiale Bohrungen erreicht werden.

Ferner illustriert Fig.2 eine weitere erfindungsgemäße Ausgestaltung, nämlich dass die Übergänge des Einstichs zu den vor- und nachgelagerten Abschnitten der Eingangswelle 5 abgerundet sind: an den Übergängen zwischen dem Einstichsgrund 19 und der jeweiligen Einstichsseitenwand 20 ist jeweils ein Übergangsradius 21 ausgebildet. Bei dem in Figur 2 gezeigten Ausführungsbeispiel entspricht dieser Übergangsradius 21 gerade dem Radius der Vollausrundung. Eine alternative, erfindungsgemäße Ausgestaltung einer Querschnittsverjüngung 4 könnte beispielsweise durch eine breiteren Einstich gegeben sein, der einen zur Längsachse der Welle 5 parallel verlaufenden, planen Einstichsgrund 19 aufweist sowie Übergangsradien 21, die jeweils zwischen den Seitenwänden des Einstichs 20 und dem Einstichsgrund 19 ausgebildet sind. Die Ausgestaltung derartiger Übergangsradien ist vorteilhaft, um Spannungsspitzen zu vermeiden, die die Dauerfestigkeit der Sollbruchstelle herabsetzen können.

Es versteht sich, dass die gezeigten Schließvorrichtungen 1 jeweils mit einem beweglichen Teil eines Absperrbauwerkes verbunden werden können, um eine Absperrbauwerk-Schließvorrichtung zu bilden.

Zusammenfassend kann es bei Schließvorrichtungen 1, insbesondere Schließvorrichtungen für Armaturen oder Absperrbauwerke, mit Getrieben 2, 18 bei Überlastung des Antriebsstrangs zu Beschädigungen derselben und in der Folge zu einem Gehäusebruch kommen. Um einen wirksamen Überlastschutz auszubilden, schlägt die Erfindung daher vor, im Falle einer Überlast den Antriebsstrang der Schließvorrichtung 1 zu unterbrechen, indem, vorzugsweise innerhalb des Getriebes 2, 18 und nahe am Antrieb, eine Sollbruchstelle 4 in dem Antriebsstrang ausgebildet ist, wobei das Getriebe 2 bevorzugt selbsthemmend auszugestalten ist. Im Falle einer Überlast, die insbesondere in Form eines Torsionsmoments vorliegen kann, bricht die Sollbruchstelle 4 und unterbricht somit den Kraftfluss vom Antrieb zu einer angeschlossenen Armatur oder einem angeschlossenen verstellbaren Absperrbauwerk. Damit können weitere Folgeschäden, insbesondere ein Gehäusebruch, wirksam vermieden werden.

### Bezugszeichenliste

- 1: Schließvorrichtung
- 2: Schwenkgetriebe
- 3: Gehäuse
- 4: Sollbruchstelle
- 5: Eingangswelle
- 6: Querschnittsverjüngung
- 7: Schneckenrad
- 8: Hohlschnecke
- 9: Trägerwelle
- 10: Planetenradträger
- 11: Planetenrad
- 12: Hohlrad
- 13: Zwischenritzel
- 14: Gehäusedeckel
- 15: Anschlag
- 16: Kontermutter
- 17: Lagerung
- 18: Vorgetriebe
- 19: Einstichgrund
- 20: Einstichseitenwand
- 21: Übergangsradius
- 22: Planetenradbolzen

## Patentansprüche

1. Schließvorrichtung (1) zum Verstellen einer Armatur oder eines Absperrbauwerks zwischen einer Schließstellung und einer Offenstellung, mit einem Getriebe (2), das in einem Gehäuse (3) angeordnet ist, wobei in einem das Getriebe (2) umfassenden Antriebsstrang der Schließvorrichtung (1) eine Sollbruchstelle (4) ausgebildet ist, **dadurch gekennzeichnet, dass** das Getriebe (2) durch ein Schneckengetriebe gebildet ist, das ein Schneckenrad (7) aufweist, mit welchem eine Armatur und/oder ein bewegliches Teil eines Absperrbauwerks verschwenkbar ist, und in Form eines Schwenkgetriebes mit wenigstens einem Begrenzungsanschlag (15) am Schneckenrad (7) ausgestaltet ist und dass der wenigstens eine Begrenzungsanschlag (15) innerhalb des Gehäuses (3) ausgebildet ist, wobei der wenigstens eine Begrenzungsanschlag (15) eine Bewegung im Antriebsstrang begrenzt, wobei die Sollbruchstelle (4) derart ausgelegt ist, dass eine maximale Kraft, welche über die Sollbruchstelle (4) hinweg entlang des Antriebsstrangs und bis zu dem wenigstens einen Begrenzungsanschlag (15) übertragbar ist, kleiner ist als eine zweite Kraft, der das Gehäuse (3) standhält, wenn diese zweite Kraft an der Stelle des wenigstens einen Begrenzungsanschlags (15) wirkt.

2. Schließvorrichtung (1) nach Anspruch 1, **dadurch gekennzeichnet, dass** das Getriebe (2) selbsthemmend ausgebildet ist, insbesondere wobei die Sollbruchstelle (4) antriebsseitig zu dem Getriebe (2) im Antriebsstrang angeordnet ist.

3. Schließvorrichtung (1) nach einem der vorhergehenden Ansprüche, **dadurch gekennzeichnet, dass** die Sollbruchstelle (4) in Form einer Torsionsbruchstelle (4) ausgebildet ist, insbesondere wobei ein Bruchmoment der Torsionsbruchstelle (4) ein Vielfaches eines Betätigungsmomentes beträgt.

4. Schließvorrichtung (1) nach einem der vorhergehenden Ansprüche, **dadurch gekennzeichnet, dass** die Sollbruchstelle (4) an einem Teil des Antriebsstrangs ausgebildet ist, welches lösbar mit dem Getriebe (2) oder einem Vorgetriebe (18) gekoppelt ist.

5. Schließvorrichtung (1) nach einem der vorhergehenden Ansprüche, **dadurch gekennzeichnet, dass** die Sollbruchstelle (4) in und/oder an einer Welle (5) des Getriebes (2) oder eines Vorgetriebes (18) und/oder in Form einer Querschnittsverjüngung (6) ausgebildet ist, insbesondere wobei die Querschnittsverjüngung (6) an einem Übergang zu einem größeren Durchmesser oder Querschnitt einen Übergangsradius (21) aufweist.

6. Schließvorrichtung (1) nach Anspruch 5, **dadurch gekennzeichnet, dass** die Querschnittsverjüngung (6) in Form eines Einstichs ausgestaltet ist, insbesondere wobei bei Ausgestaltung des Einstichs an einer Welle (5) eine Tiefe des Einstichs wenigstens 10% des Durchmessers dieser Welle (5) beträgt und/oder wobei an einem Übergang zwischen einem Einstichsgrund (19) und einer Einstichsseitenwand (20) ein Übergangsradius (21) ausgebildet ist.

7. Schließvorrichtung (1) nach Anspruch 5 oder 6, **dadurch gekennzeichnet, dass** die Querschnittsverjüngung (6) innenseitig an einer Hohlwelle ausgebildet ist oder durch mindestens eine Bohrung oder Ausnehmung oder in Form einer Vollausrundung oder in Form einer Nut.

8. Schließvorrichtung (1) nach einem der vorhergehenden Ansprüche, **dadurch gekennzeichnet, dass** die Sollbruchstelle (4) an einer Eingangswelle (5) des Getriebes (2) oder eines Vorgetriebes (18) ausgebildet ist.

9. Schließvorrichtung (1) nach einem der vorhergehenden Ansprüche, **dadurch gekennzeichnet, dass** ein Getriebeteil, an welchem die Sollbruchstelle (4) ausgebildet ist, von mindestens einer Lagerung (17) gehalten ist.

10. Schließvorrichtung (1) nach einem der vorhergehenden Ansprüche, **dadurch gekennzeichnet, dass** die Sollbruchstelle (4) an einem zwischen Getriebestufen angeordneten Getriebeteil, insbesondere an einem Zwischenritzel (13) oder einer Zwischenwelle, ausgebildet ist, welches zwischen einer ersten Getriebestufe und einer zweiten Getriebestufe der Schließvorrichtung vermittelt.

11. Schließvorrichtung (1) nach einem der vorhergehenden Ansprüche, **dadurch gekennzeichnet, dass** die Sollbruchstelle (4) an einem beweglichen Teil des Getriebes (2) oder eines Vorgetriebes (18) ausgebildet ist, welches derart in Eingriff mit weiteren Teilen des Getriebes (2) oder eines Vorgetriebes (18) steht, dass es, bevorzugt nach dem Bruch der Sollbruchstelle (4), entgegen einer Einbaurichtung aus dem Getriebe (2) beziehungsweise aus dem Vorgetriebe (18) entnommen werden kann.

## Claims

1. Closing device (1) for adjusting a fitting or blocking retaining structure between a closed position and an opened position, having a gearbox (2) which is disposed in a housing (3), wherein a predetermined breaking point (4) is configured in a drive section of the closing device (1) that comprises the gearbox (2), **characterized in that** the gearbox (2) is formed by a worm gear set which has a worm gear (7) by way of which a fitting or a movable part of a blocking retaining structure is pivotable and is designed in the form of a pivoting gearbox having at least one detent (15) on the worm gear (7), and **in that** the at least one detent (15) is configured within the housing (3), wherein the at least one detent (15) delimits a movement in the drive section, where the predetermined breaking point (4) is conceived in such a manner that a maximum force which by way of the predetermined breaking point (4) is able to be transmitted along the drive section and up to the at least one detent (15) is less than a second force which the housing (3) withstands when this second force acts on the location of the at least one detent (15).

2. Closing device (1) according to Claim 1, **characterized in that** the gearbox (2) is configured so as to be self-locking, in particular wherein the predetermined breaking point (4) in the drive section is disposed so as to be proximal to the gearbox (2).

3. Closing device (1) according to one of the preceding claims, **characterized in that** the predetermined breaking point (4) is configured in the form of a predetermined torsion breaking point (4), in particular wherein a breakage torque of the predetermined torsion breaking point (4) is a multiple of an activation torque.

4. Closing device (1) according to one of the preceding claims, **characterized in that** the predetermined breaking point (4) is configured on a part of the drive section that is releasably coupled to the gearbox (2) or a primary gearbox (18).

5. Closing device (1) according to one of the preceding claims, **characterized in that** the predetermined breaking point (4) is configured in and/or on a shaft (5) of the gearbox (2) or of a primary gearbox (18), and/or in the form of a cross-sectional diminution (6), in particular wherein the cross-sectional diminution (6) on a transition towards a larger diameter or cross section has a transition radius (21).

6. Closing device (1) according to Claim 5, **characterized in that** the cross-sectional diminution (6) is designed in the form of a recess, in particular wherein, in the case of the recess being designed on a shaft (5), a depth of the recess is at least 10% of the diameter of this shaft (5), and/or wherein a transition radius (21) is configured at a transition between a recess base (19) and a recess lateral wall (20).

7. Closing device (1) according to Claim 5 or 6, **characterized in that** the cross-sectional diminution (6) is configured on the inside of a hollow shaft, or by at least one bore or clearance, or in the form of a full fillet, or in the form of a groove.

8. Closing device (1) according to one of the preceding claims, **characterized in that** the predetermined breaking point (4) is configured on an input shaft (5) of the gearbox (2) or of a primary gearbox (18).

9. Closing device (1) according to one of the preceding claims, **characterized in that** a gearbox part on which the predetermined breaking point (4) is configured is held by at least one mounting (17).

10. Closing device (1) according to one of the preceding claims, **characterized in that** the predetermined breaking point (4) is configured on a gearbox part, which is disposed between gear speeds, in particular on an intermediate sprocket (13) or an intermediate shaft which intervenes between a first gear speed and a second gear speed of the closing device.

11. Closing device (1) according to one of the preceding claims, **characterized in that** the predetermined breaking point (4) is configured on a movable part of the gearbox (2) or of a primary gearbox (18) that engages with further parts of the gearbox (2) or of a primary gearbox (18) in such a manner that said movable part, preferably upon breakage of the predetermined breaking point (4), can be removed from the gearbox (2), or from the primary gearbox (18), respectively, counter to an installation direction.

## Revendications

1. Dispositif de fermeture (1) pour ajuster une vanne ou un ouvrage de fermeture entre une position de fermeture et une position d'ouverture, avec un engrenage (2) qui est disposé dans un boîtier, un point de rupture théorique (4) étant formé dans une chaîne cinématique du dispositif de fermeture (1) comprenant l'engrenage (2), **caractérisé en ce que** l'engrenage (2) est constitué par un engrenage à vis sans fin qui possède une roue à vis sans fin (7) avec laquelle une vanne ou une pièce mobile d'un ouvrage de fermeture peut pivoter, et est configuré sous la forme d'un engrenage de pivotement avec au moins une butée de limitation (15) sur la roue à vis sans fin (7) et que l'au moins une butée de limitation (15) est disposée à l'intérieur du boîtier (3), l'au moins une butée de limitation (15) limitant un mouvement dans la chaîne cinématique, le point de rupture théorique (4) étant conçu de sorte qu'une force maximale, qui peut être transmise par le point de rupture théorique (4) le long de la chaîne cinématique jusqu'à l'au moins une butée de limitation (15), est inférieure à une deuxième force à laquelle le boîtier (3) résiste quand cette deuxième force agit à l'emplacement de l'au moins une butée de limitation (15).

2. Dispositif de fermeture (1) selon la revendication 1, **caractérisé en ce que** l'engrenage (2) est autobloquant, en particulier dans lequel le point de rupture théorique (4) est situé du côté menant par rapport à l'engrenage (2) sur la chaîne cinématique.

3. Dispositif de fermeture (1) selon une des revendications précédentes, **caractérisé en ce que** le point de rupture théorique (4) est configuré sous la forme d'un point de rupture par torsion (4), un couple de rupture du point de rupture par torsion étant en particulier un multiple d'un couple d'actionnement.

4. Dispositif de fermeture (1) selon une des revendications précédentes, **caractérisé en ce que** le point de rupture théorique (4) est formé sur une partie de la chaîne cinématique qui est couplée de façon amovible avec l'engrenage (2) ou un pré-engrenage (18).

5. Dispositif de fermeture (1) selon une des revendications précédentes, **caractérisé en ce que** le point de rupture théorique (4) est formé dans et/ou sur un arbre (5) de l'engrenage (2) ou d'un pré-engrenage (18) et/ou sous la forme d'un rétrécissement de section (6), le rétrécissement de section (6) présentant en particulier un rayon de transition (21) au niveau d'une transition avec un diamètre ou une section plus important.

6. Dispositif de fermeture (1) selon la revendication 5, **caractérisé en ce que** le rétrécissement de section (6) est configuré sous la forme d'une gorge (6), une profondeur de la gorge étant notamment égale, lorsque la gorge est ménagée sur un arbre (5), à au moins 10% du diamètre de cet arbre (5) et/ou un rayon de transition (21) étant formé au niveau d'une transition entre un fond de gorge (19) et une paroi latérale de gorge (20).

7. Dispositif de fermeture (1) selon la revendication 5 ou 6, **caractérisé en ce que** le rétrécissement de section (6) est formé sur la face interne d'un arbre creux ou par au moins un alésage ou un évidement ou sous la forme d'un arrondissement total ou sous la forme d'une rainure.

8. Dispositif de fermeture (1) selon une des revendications précédentes, **caractérisé en ce que** le point de rupture théorique (4) est formé sur un arbre d'entrée (5) de l'engrenage (2) ou d'un pré-engrenage (18).

9. Dispositif de fermeture (1) selon une des revendications précédentes, **caractérisé en ce qu'**une pièce d'engrenage sur laquelle le point de rupture théorique (4) est formé est maintenue par au moins un support (17).

10. Dispositif de fermeture (1) selon une des revendications précédentes, **caractérisé en ce que** le point de rupture théorique (4) est formé au niveau d'une pièce d'engrenage disposée entre des étages d'engrenage, en particulier au niveau d'un pignon intermédiaire (13) ou d'un arbre intermédiaire qui sert de médiateur entre un premier étage d'engrenage et un deuxième étage d'engrenage.

11. Dispositif de fermeture (1) selon une des revendications précédentes, **caractérisé en ce que** le point de rupture théorique (4) est formé au niveau d'une pièce mobile de l'engrenage (2) ou d'un pré-engrenage (18) qui est en prise avec d'autres pièces de l'engrenage (2) ou d'un pré-engrenage (18) de sorte qu'elle peut être démontée, de préférence après la rupture du point de rupture théorique (4), de l'engrenage (2) ou du pré-engrenage (8) dans le sens inverse du montage.
